# EUROPÄISCHE PATENTSCHRIFT

(11) **EP 2 308 736 B1**
(45) Veröffentlichungstag und Bekanntmachung des Hinweises auf die Patenterteilung: **18.01.2012**
(21) Anmeldenummer: 09013023.8
(22) Anmeldetag: 15.10.2009
(51) Int. Cl.: B61D 17/20

(54) **Innenwandverkleidung des Balges eines Übergangs zwischen zwei gelenkig miteinander verbundenen Fahrzeugen oder Fahrzeugteilen**
Interior gaiter wall lining for the intersection of two vehicles with a jointed connection or vehicle parts
Habillage de paroi intérieure du soufflet d'un passage entre deux véhicules ou parties de véhicules liés de manière articulée

(30) Priorität: 09.10.2009 EP 09012814
(43) Veröffentlichungstag der Anmeldung: 13.04.2011
(73) Patentinhaber: Hübner GmbH, 34123 Kassel (DE)
(72) Erfinder: Krug, Günter, 34302 Guxhagen (DE)
(74) Vertreter: Walther, Walther & Hinz GbR

(56) Entgegenhaltungen:
- EP-A- 0 625 459
- EP-A- 0 722 874
- EP-A- 1 524 164
- WO-A-96/10510
- DE-A1-102007 004 516
- FR-A- 2 625 160

## Beschreibung

Die vorliegende Erfindung betrifft einen Übergange zwischen zwei gelenkig miteinander verbundenen Fahrzeugen oder Fahrzeugteilen, umfassend einen Balg und eine Innenwandverkleidung, umfassend mehrere Wandelemente, die durch eine Führungseinrichtung relativ zueinander verschieblich geführt in dem Übergang angeordnet sind, wobei das dem einen Fahrzeug oder Fahrzeugteil zugeordnete erste Wandelement mit dem Fahrzeug oder Fahrzeugteil durch zwei übereinander angeordnete Anlenkungen verbunden ist.

Aus der EP 0 625 459 ist eine Innenwandverkleidung eines Übergangs zwischen zwei Fahrzeugen, insbesondere eines Übergangs mit einem Faltenbalg bekannt, die nach Art einer in sich elastisch nachgiebig und um die Hochachse in Richtung der Mitte des Übergangs gewölbt ausgebildeten Platte ausgebildet ist. Diese Seitenwandabdeckung ist hierbei nachgiebig mit dem jeweiligen Fahrzeug bzw. Fahrzeugteil verbunden. Eine solche Innenwandverkleidung baucht sich bei Kurvenfahrt des Gelenkzuges auf der Kurveninnenseite in Richtung auf das Innere des Übergangs zu aus, währenddessen auf der Kurvenaußenseite die Innenwandverkleidung gelängt wird, was insbesondere dadurch geschieht, dass zum einen die Innenwandverkleidung eine gewisse Vorwölbung aufweist, und zum anderen dadurch, dass die Innenwandverkleidung im Bereich der Anlenkung an die Fahrzeugteile elastisch nachgiebig ausgebildet ist.

Eine ganz ähnliche Innenwandverkleidung ist im Übrigen aus der EP 0 722 874 bekannt.

Nachteilig bei diesen beiden zuvor genannten Ausführungsformen einer Innenwandverkleidung ist, dass das Material für die Innenwandverkleidung relativ aufwendig ist, da die Anforderungen an die elastische Verformung des Materials sehr hoch sind, was einen hohen Preis für eine solche Innenwandverkleidung bedingt. Gleichwohl ist festzuhalten, dass die bekannte Innenwandverkleidung durchaus ihren Zweck erfüllt, nämlich zum einen dem Schutz des Balges vor Vandalismus, und zum anderen eine bessere optische Darstellung des Übergangsinnenraumes als solchen.

Des Weiteren ist eine Innenwandverkleidung bekannt, die aus drei einzelnen Wandelementen besteht, wobei zwei der Wandelemente relativ zu dem dritten Wandelement verschieblich ausgebildet sind. Zur Führung der Wandelemente ist am oberen und am unteren Ende ein Scherenarm vorgesehen, der bewirkt, dass die Wandelemente sich bei durch Kurvenfahrt hervorgerufener Bewegung synchron bewegen. Die äußeren Wandelemente sind darüber hinaus vertikal beweglich angeordnet, um zu gewährleisten, dass beispielsweise bei Nickbewegungen der Fahrzeugteile bzw. der Fahrzeuge relativ zueinander und einem entsprechenden Höhenversatz der Fahrzeuge relativ zueinander die entsprechende Bewegung durch die Wandverkleidung nachempfunden werden kann. Um einen solchen Höhenversatz zu ermöglichen, ist an jedem Fahrzeugteil bzw. Fahrzeug eine vertikale Stange zur Aufnahme des Wandelementes vorgesehen, wobei das Wandelement auf der Stange in vertikaler Richtung federnd gelagert ist. Darüber hinaus sind am oberen und am unteren Ende der Wandelemente Spaltabdeckungen vorgesehen. Erkennbar ist, dass die zuvor beschriebene Wandabdeckung sehr aufwendig und auch entsprechend teuer ist, was insbesondere auch durch die Verwendung der beiden Scherenarme bedingt ist.

Aus der EP 1 524 164 B1 ist nunmehr eine Innenwandverkleidung der eingangs genannten Art bekannt, die sich dadurch auszeichnet, dass zwei Wandelemente vorgesehen sind, die durch die Führungseinrichtung relativ zueinander verschieblich geführt in dem Übergang zwischen den beiden Fahrzeugen oder Fahrzeugteilen angeordnet sind. Hierbei ist vorgesehen, dass jedes Wandelement über zwei beabstandet zueinander angeordnete Scharniere mit im Einbauzustand vertikaler Drehachse an dem jeweiligen Fahrzeug oder Fahrzeugteil befestigt ist. Die beiden Wandelemente überlappen einander. Bekanntermaßen sind zwei gelenkig miteinander verbundene Fahrzeuge oder Fahrzeugteile den unterschiedlichsten Fahrbewegungen ausgesetzt, wie z. B: Wand-, Knick- und Nickbewegungen. Insbesondere bei Wankbewegungen ist es nunmehr so, dass es zwischen den beiden einander überlappenden Wandelementen hierbei zu einer Spaltbildung kommt. Die Innenwandverkleidung befindet sich auf der Innenseite des Balges der Übergangseinrichtung, sodass hierbei die Gefahr besteht, dass Personen, die während einer Wankbewegung in den sich bildenden Spalt zwischen den Wandelementen eingreifen, sich die Finger klemmen.

Die der Erfindung zugrunde liegende Aufgabe besteht nun darin, eine solche Spaltbildung zwischen den Wandelementen weitestgehend zu vermeiden.

Zur Lösung der Aufgabe wird erfindungsgemäß bei einer Innenwandverkleidung der eingangs genannten Art, mit mehreren Wandelementen , die durch eine Führungseinrichtung relativ zueinander verschieblich geführt in dem Übergang angeordnet sind, und wobei das dem einen Fahrzeug oder Fahrzeugteil zugeordnete eine Wandelement mit dem anderen Fahrzeug oder Fahrzeugteil durch zwei übereinander angeordnete Anlenkungen verbunden ist, vorgeschlagen, dass das dem anderen Fahrzeug oder Fahrzeugteil zugeordnete Wandelement durch eine einzige im Einbauzustand um eine horizontale Achse drehbare Gelenkverbindung mit dem Fahrzeug oder Fahrzeugteil verbunden ist. Hieraus wird erkennbar, dass bei Wankbewegungen der beiden Fahrzeugteile relativ zueinander, also einer Bewegung, bei der die Fahrzeuge relativ zueinander verdreht werden, es deshalb zu keiner Spaltbildung zwischen den einzelnen Wandelementen mehr kommen kann, weil die Innenwandverkleidung als solche aufgrund der zugelassenen Drehbewegung durch die Gelenkverbindung um die horizontale Drehachse, die Innenwandverkleidung als Ganzes diesen Fahrbewegungen nachgeben kann, ohne dass es zu einer Spaltbildung zwischen den einzelnen einander überlappenden Wandelementen kommt.

Weitere Merkmale und Ausgestaltungen der Erfindung sind den Unteransprüchen zu entnehmen.

Vorzugsweise umfasst die Innenwandverkleidung zwei Wandelemente.

So ist insbesondere vorgesehen, dass die Gelenkverbindung durch einen sich über einen Teil der Höhe des Wandelementes erstreckenden Träger mit dem Wandelement in Verbindung steht. Durch den Träger wird das Wandelement, und insbesondere auch die gesamte Innenwandverkleidung, stabilisiert.

Nach einem weiteren Merkmal der Erfindung ist der Träger endseitig durch jeweils ein Scharnier mit im Einbauzustand vertikaler Drehachse mit dem Wandelement verbunden, um auch dem Auftreten anderer Fahrbewegungen, wie den bereits zuvor erwähnten Nick- und Knickbewegungen oder auch überlagerten Bewegungen der einzelnen Bewegungsarten, nachgeben zu können.

Die Gelenkverbindung selbst umfasst eine sich im Einbauzustand horizontal erstreckende Achse, um die der Träger durch eine Gleitbuchse drehbar gelagert ist. Die Achse selbst ist bevorzugt durch eine Anlenkplatte mit dem anderen Fahrzeug oder Fahrzeugteil verbunden.

Der Kern der Erfindung besteht somit darin, eine Innenwandverkleidung mit vorzugsweise zwei Wandelementen derart an den Stirnseiten der gelenkig miteinander verbundenen Fahrzeuge oder Fahrzeugteile anzubringen, dass bei Wankbewegungen bzw. auch bei mit Wankbewegungen überlagerten anderen Bewegungsarten die Innenwandverkleidung als solche der entsprechenden Bewegung der Wagenkästen der Fahrzeuge bzw. Fahrzeugteile nachgeben kann, ohne dass sich zwischen den einzelnen Wandelementen Spalte auftun.

Die Führungseinrichtung umfasst nach einem weiteren Merkmal der Erfindung mindestens einen an dem einen Wandelement angeordneten parallel und beabstandet zu dem einen Wandelement verlaufenden Führungsarm, wobei der Führungsarm das andere Wandelement verschieblich aufnimmt. Hierbei entspricht der Abstand zwischen dem einen Wandelement und dem Führungsarm etwa der Stärke des anderen Wandelementes, da - wie bereits erläutert - sich die beiden Wandelemente einander überlappen. Die Anlenkung des einen Wandelementes an dem entsprechenden Wagenkasten erfolgt - wie bereits ausgeführt - durch zwei übereinander angeordnete Anlenkungen, wobei eine solche Anlenkung jeweils als Scharnier mit im Einbauzustand vertikaler Drehachse ausgebildet ist.

Zum Anbau der Innenwandverkleidung bzw. auch, um den Zugang zum Balg von innen her zu ermöglichen, ist vorgesehen, dass die Scharniere lösbar an dem Fahrzeug oder Fahrzeugteil oder an dem Träger angeordnet sind. Hierzu kann ein Bolzen vorgesehen sein, der in eine Buchse einführbar ist, wobei die Fixierung des Bolzens in der Buchse z. B. durch Madenschrauben erfolgt. Weiterhin ist vorteilhaft, wenn auch die Anlenkplatte zur Befestigung der Gelenkverbindung an dem anderen Fahrzeugteil oder Fahrzeug lösbar an dem Fahrzeug oder Fahrzeugteil befestigbar ist.

Nach einem weiteren besonderen Merkmal der Erfindung zeigt der Führungsarm eine Führungshülse, wobei die Führungshülse schwenkbeweglich an dem anderen Wandelement angeordnet ist. Durch die Ausbildung der Führung als Führungshülse, die auf dem Führungsarm längsbeweglich angeordnet ist, wird eine sehr stabile Verbindung bereitgestellt. Die schwenkbewegliche Anordnung der Führungshülse an dem anderen Wandteil bewirkt, dass bei einem Höhenversatz der Fahrzeugteile bzw. der Fahrzeuge relativ zueinander, was die Folge von Nickbewegungen der Fahrzeuge bzw. Fahrzeugteile beim Fahren der Fahrzeuge über eine Kuppe oder durch eine Senke ist, der hierfür erforderliche Versatz der beiden Wandelemente in der Höhe möglich ist. In diesem Zusammenhang bleibt zu erwähnen, dass auch der Führungsarm an dem einen Wandelement schwenkbeweglich angeordnet ist. Im Einzelnen zeigt das eine Wandelement einen Lagerbock, an dem der Führungsarm schwenkbeweglich angeordnet ist.

Darüber hinaus sind zwischen Führungshülse und Führungsarm Mittel zur Begrenzung des Weges der Führungshülse auf dem Führungsarm vorgesehen, um ein Auseinanderziehen der beiden Wandelemente, mit der Folge der Bildung eines Vertikalspaltes zu vermeiden.

Anhand der Zeichnungen wird die Erfindung nachstehend beispielhaft näher erläutert.
- Figur 1: zeigt die Innenwandverkleidung als solche in perspektivischer Darstellung von hinten;
- Figur 2: zeigt einen Schnitt durch die Innenwandverkleidung gemäß Figur 1 entsprechend der Linie II - II aus Figur 1;
- Figur 3: zeigt die Einzelheit X aus Figur 1 in vergrößerter Darstellung.

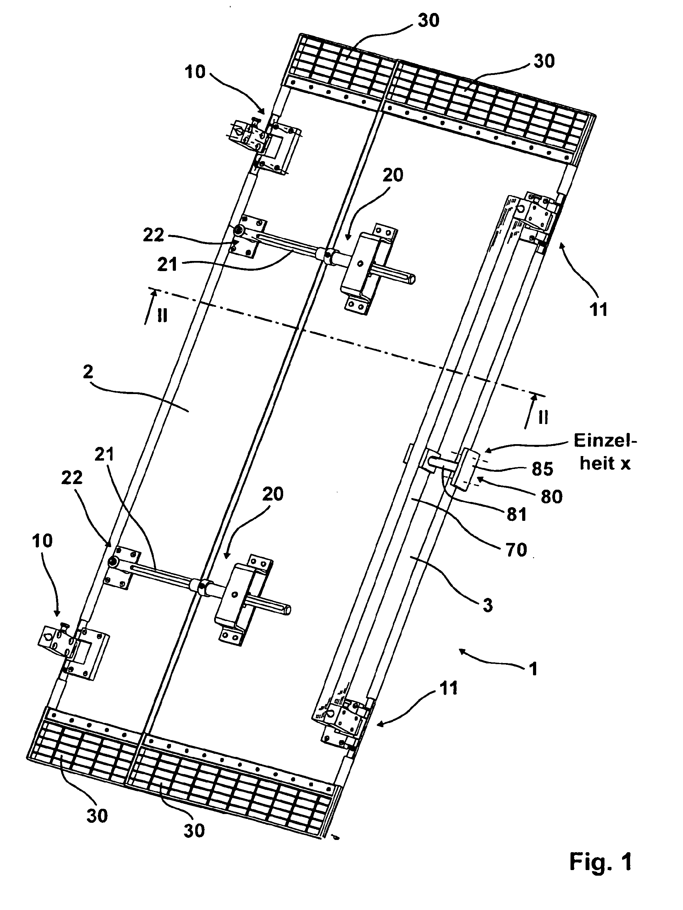

Die Innenwandverkleidung 1 gemäß Figur 1 umfasst die beiden Wandelemente 2 und 3. Die Wandelemente 2 und 3 besitzen an ihren Stirnseiten jeweils ein oberes und ein unteres Scharnier 10, 11. Zur Verbindung der beiden Wandelemente 2, 3 untereinander sind zwei übereinander angeordnete Führungseinrichtungen 20 vorgesehen. Am oberen und am unteren Ende eines jeden Wandelementes 2, 3 ist darüber hinaus eine elastische Spaltabdeckung 30 angeordnet.

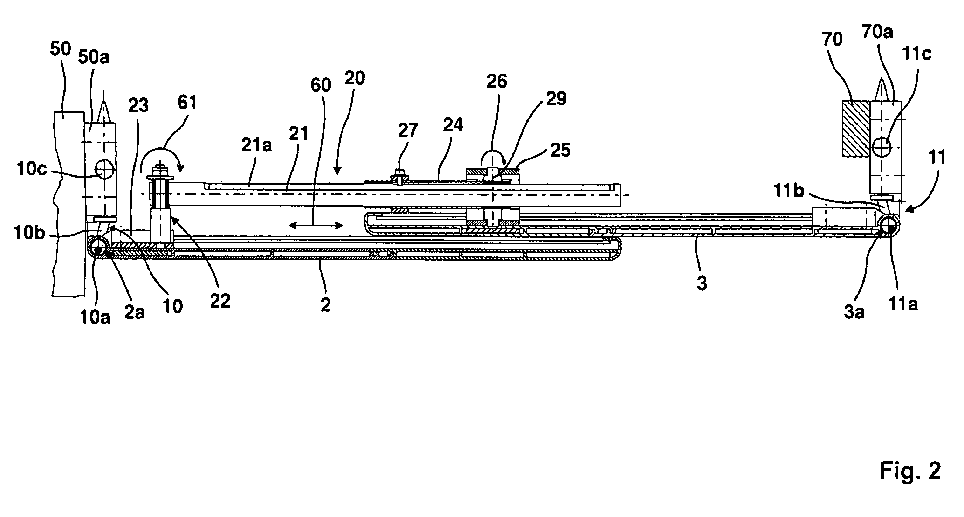

Die Ausbildung der Führungseinrichtungseinrichtung 20 ergibt sich insbesondere aus der Figur 2. So ist aus Figur 2 der Führungsarm 21 erkennbar, der durch den insgesamt mit 22 bezeichneten Lagerbock schwenkbeweglich an dem einen Wandelement 2 befestigt ist. Der Lagerbock 22 lagert auf einer Montageplatte 23, die mit dem Wandelement 2 durch Schrauben verbunden ist. Der Führungsarm 21, der schwenkbeweglich von dem Lagerbock 22 aufgenommen wird, zeigt eine Führungshülse 24, wobei die Führungshülse 24 von einer Manschette 25 aufgenommen ist, die ähnlich einer Brücke an der Rückseite des anderen Wandelementes 2 befestigt ist, wie sich dies besonders deutlich aus der Figur 1 ergibt. Wesentlich ist, dass die Führungshülse 24 von der Manschette 25 schwenkbeweglich entsprechend dem Pfeil 26 aufnehmbar ist. Zur schwenkbeweglichen Aufnahme der Führungshülse 24 in der brückenartigen Manschette 25 auf der Rückseite des anderen Wandelementes entsprechend dem Pfeil 26 dient die Achse 29.

Der Führungsarm 21 besitzt darüber hinaus eine Nut 21 a, in der ein Sicherungsstift 27 geführt ist, der an der Führungshülse 24 angeordnet ist. Die Nut 21 a erstreckt sich über im Wesentlichen die gesamte Länge des

Der Führungsarm 21 besitzt darüber hinaus eine Nut 21 a, in der ein Sicherungsstift 27 geführt ist, der an der Führungshülse 24 angeordnet ist. Die Nut 21 a erstreckt sich über im Wesentlichen die gesamte Länge des Führungsarmes 21 und dient in Verbindung mit dem Sicherungsstift 27 dazu zu verhindern, dass die Wandelemente auseinandergezogen werden.

Die Anbindung des Wandelementes 2 erfolgt durch zwei übereinander angeordnete Scharniere 10 an dem Wagenkasten des einen Fahrzeugs oder Fahrzeugteils 50. Das Scharnier 10 umfasst hierbei das Gelenkauge 2a zur Aufnahme eines Bolzens 10a, an dem der Scharnierarm 10b angelenkt ist, der durch die am Fahrzeugteil 50 angeordnete Buchse 50a lösbar aufnehmbar ist. Zur Fixierung des Scharnierarmes 10b in der Buchse 50a dient eine Madenschraube 10c. Die Befestigung der Innenwandverkleidung auf der gegenüberliegenden Seite erfolgt ebenfalls durch zwei Scharniere 11 mit jeweils einem Gelenkauge 3a, das der Aufnahme des Bolzens 11 a dient, an dem der Scharnierarm 11 b befestigt ist, der durch die am Träger 70 angeordnete Buchse 70a lösbar aufnehmbar ist. Zur Fixierung des Scharnierarmes 11 b in der Buchse 70a dient wiederum eine Madenschraube 11c.

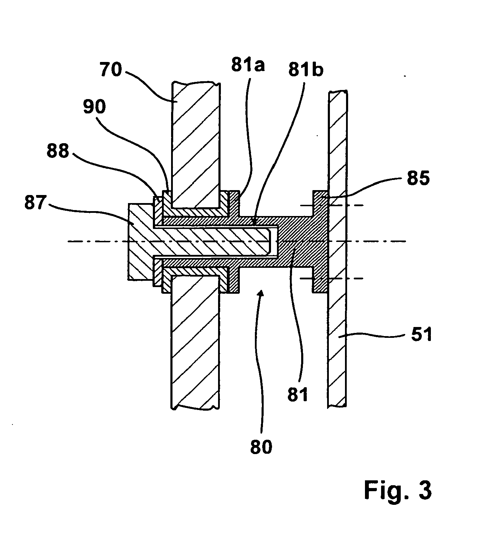

Die Verbindung des Trägers 70 mit der Stirnseite des Wagenkastens des Fahrzeugs bzw. des Fahrzeugteils erfolgt über die insgesamt mit 80 bezeichnete Gelenkverbindung (Fig. 1; Fig. 3). Die Gelenkverbindung 80 umfasst eine Achse 81, um die herum um eine Gleitbuchse 90 der Träger 70 drehbar gelagert ist. Die Achse 81 besitzt endseitig die Anlenkplatte 85, die der Verbindung mit der Stirnseite 51 des anderen Fahrzeugs dient.

Aus der Darstellung gemäß Figur 3 ist der Aufbau der Gelenkverbindung im Einzelnen erkennbar. Erkennbar ist die Achse 81, wobei an der Achse 81 ein Bund 81 a vorgesehen ist, wobei die Achse auf ihrer Vorderseite eine Bohrung 81 b zur Aufnahme der Schraube 87 aufweist, die mit einer Anlagescheibe 88 auf die Gleitbuchse 90 wirkt, auf der der Träger 70 lagert. Die Gleitbuchse ist in der Ansicht U-profilförmig ausgebildet. Die Anlenkplatte 85 ist durch Schrauben mit der Stirnseite 51 des Wagenkastens des Fahrzeugs bzw. Fahrzeugteils Verbunden.

Die Funktionsweise der Innenwandverkleidung ist nun derart, dass sich bei Kurvenfahrt die beiden Wandelemente 2, 3 entsprechend dem Pfeil 60 relativ zueinander verschieben, wie sich dies aus Figur 2 ergibt. Bei einem Höhenversatz der beiden Fahrzeugteile erfolgt ein Ausgleich zwischen den beiden Wandelementen durch Verschwenken des Führungsarmes 21 um den Lagerbock 22 entsprechend dem Pfeil 61 bei gleichzeitiger Verschwenkung der Führungshülse 24 um die Achse 29 entsprechend dem Pfeil 26. Die sich hierbei am unteren bzw. am oberen Ende der Wandelemente ergebenden Spalte werden durch die elastische Spaltabdeckung 30 abgedeckt.

## Patentansprüche

1. Übergang zwischen zwei gelenkig miteinander verbundenen Fahrzeugen oder Fahrzeugteilen, umfassend einen Balg und eine Innenwandverkleidung umfassend mehrere Wandelemente (2, 3), die durch eine Führungseinrichtung (20) relativ zueinander verschieblich geführt in dem Übergang angeordnet sind, wobei das dem einen Fahrzeug oder Fahrzeugteil (50) zugeordnete eine Wandelement (2) mit dem Fahrzeug oder Fahrzeugteil durch zwei übereinander angeordnete Anlenkungen (10) verbunden ist,
**dadurch gekennzeichnet,**
**dass** das dem anderen Fahrzeug oder Fahrzeugteil zugeordnete andere Wandelement (3) durch eine einzige im Einbauzustand um eine horizontale Achse drehbare Gelenkverbindung (80) mit dem anderen Fahrzeug oder Fahrzeugteil (50) verbunden ist.

2. Übergang nach Anspruch 1,
**dadurch gekennzeichnet,**
**dass** die Gelenkverbindung (80) durch einen sich über einen Teil der Höhe des Wandelementes (2, 3) erstreckenden Träger (70) mit dem Wandelement (3) in Verbindung steht.

3. Übergang nach einem der voranstehenden Ansprüche,
**dadurch gekennzeichnet,**
**dass** der Träger (70) endseitig durch jeweils ein Scharnier (11) mit im Einbauzustand vertikaler Drehachse mit dem Wandelement (3) verbunden ist.

4. Übergang nach einem der voranstehenden Ansprüche,
**dadurch gekennzeichnet,**
**dass** die Gelenkverbindung (80) eine sich im Einbauzustand horizontal erstreckende Achse (81) umfasst, um die der Träger (70) durch eine Gleitbuchse (90) drehbar gelagert ist.

5. Übergang nach einem der voranstehenden Ansprüche,
**dadurch gekennzeichnet,**
**dass** die Achse (81) durch eine Anlenkplatte (85) mit dem anderen Fahrzeug oder Fahrzeugteil verbindbar ist.

6. Übergang nach einem der voranstehenden Ansprüche,
**dadurch gekennzeichnet,**
**dass** die Führungseinrichtung (20) mindestens einen an dem einen Wandelement (3) angeordneten parallel und beabstandet zu dem einen Wandelement (3) verlaufenden Führungsarm (21) umfasst, wobei der Führungsarm (21) das andere Wandelement (2) verschieblich aufnimmt.

7. Übergang nach einem der voranstehenden Ansprüche,
**dadurch gekennzeichnet,**
**dass** der Abstand zwischen dem einen Wandelement (3) und dem Führungsarm (21) der Stärke des anderen Wandelements (2) entspricht.

8. Übergang nach einem der voranstehenden Ansprüche,
**dadurch gekennzeichnet,**
**dass** die Anlenkung als Scharnier (10) mit im Einbauzustand vertikaler Drehachse ausgebildet ist.

9. Übergang nach einem der voranstehenden Ansprüche,
**dadurch gekennzeichnet,**
**dass** das Scharnier (10) lösbar an dem Fahrzeug oder Fahrzeugteil (50) angeordnet ist.

10. Übergang nach einem der voranstehenden Ansprüche,
**dadurch gekennzeichnet,**
**dass** der Führungsarm (21) eine Führungshülse (24) aufweist, wobei die Führungshülse (24) schwenkbeweglich an dem anderen Wandelement (2) angeordnet ist.

11. Übergang nach einem der voranstehenden Ansprüche,
**dadurch gekennzeichnet,**
**dass** der Führungsarm (21) an dem einen Wandelement (3) schwenkbeweglich angeordnet ist.

12. Übergang nach einem der voranstehenden Ansprüche,
**dadurch gekennzeichnet,**
**dass** das eine Wandelement (3) einen Lagerbock (22) aufweist, an dem der Führungsarm (21) schwenkbeweglich angeordnet ist.

13. Übergang nach einem der voranstehenden Ansprüche,
**dadurch gekennzeichnet,**
**dass** zwischen der Führungshülse (24) und dem Führungsarm (21) Mittel (27) zur Begrenzung des Weges der Führungshülse (24) auf dem Führungsarm (21) vorgesehen sind.

14. Übergang nach Anspruch 1,
**dadurch gekennzeichnet,**
**dass** die Innenwandverkleidung (1) zwei Wandelemente (2, 3) umfasst.

## Claims

1. A passage between two hinge-linked vehicles or vehicle parts comprising a bellows and an interior wall cladding comprising several wall elements (2, 3), which are arranged guided in a shiftable way relative to each other in the passage by a guiding device (20), with one wall element (2) attributed to one vehicle or vehicle part (50) being connected with the vehicle or vehicle part by two linkages (10) superimposed one upon the other,
**characterized in**
**that** the other wall element (3) attributed to the other vehicle or vehicle part being connected with the other vehicle or vehicle part (50) by a single articulation (80) pivoted around a horizontal axis in mounted condition.

2. A passage according to claim 1,
**characterized in**
**that** the articulation (80) is connected with the wall element (3) by a girder (70) extending over a part of the height of the wall element (2, 3).

3. A passage according to any one of the preceding claims,
**characterized in**
**that** the girder (70) is connected with the wall element (3) at its end by a hinge (11) each with vertical rotating axis in mounted condition.

4. A passage according to any one of the preceding claims,
**characterized in**
**that** the articulation (80) comprises an axis extending horizontally in mounted condition around which the girder (70) is rotatably carried by a slide bush (90).

5. A passage according to any one of the preceding claims
**characterized in**
**that** the axis (81) is connectable with the other vehicle or vehicle part by a link plate (85).

6. A passage according to any one of the preceding claims,
**characterized in**
**that** the guiding device (20) comprises at least one guide arm (21) arranged on the one wall element (3) and extending in parallel and spaced from the one wall element (3) with the guide arm (21) shiftably receiving the other wall element (2).

7. A passage according to any one of the preceding claims,
**characterized in**
**that** the distance between the one wall element (3) and the guide arm (21) corresponds to the strength of the other wall element (2).

8. A passage according to any one of the preceding claims,
**characterized in**
**that** the linkage is formed as a hinge (10) with vertical rotating axis in mounted condition.

9. A passage according to any one of the preceding claims,
**characterized in**
**that** the hinge (10) is arranged removably on the vehicle or vehicle part (50).

10. A passage according to any one of the preceding claims
**characterized in**
**that** the guide arm (21) comprises a guide bush (24), with the guide bush (24) being pivotally arranged on the other wall element (2).

11. A passage according to any one of the preceding claims,
**characterized in**
**that** the guide arm (21) is pivotally arranged on the one wall element (3).

12. A passage according to any one of the preceding claims,
**characterized in**
**that** the one wall element (3) comprises a bearing block (22) on which the guide arm (21) is pivotally arranged.

13. A passage according to any one of the preceding claims,
**characterized in**
**that** between the guide bush (24) and the guide arm (21) means (27) for limiting the travel of the guide bush (24) on the guide arm (21) are provided.

14. A passage according to claim 1,
**characterized in**
**that** the interior wall cladding (1) comprises two wall elements (2, 3).

## Revendications

1. Intercommunication entre deux véhicules ou parties de véhicule reliés l'un à l'autre de façon articulée, comprenant un soufflet et un revêtement intérieur de paroi comprenant plusieurs éléments de paroi (2, 3) qui sont guidés mobiles en translation l'un par rapport à l'autre par un dispositif de guidage (20) à l'intérieur de l'intercommunication, l'un des éléments de paroi (2) qui est associé à l'un des véhicules ou à l'une des parties de véhicule (50) étant relié au véhicule ou à la partie de véhicule par deux articulations (10) disposées l'une au-dessus de l'autre,
**caractérisée en ce que**
l'autre élément de paroi (3) associé à l'autre véhicule ou à l'autre partie de véhicule est relié à l'autre véhicule ou à l'autre partie de véhicule (50) par une liaison d'articulation unique (80) qui peut tourner autour d'un axe horizontal à l'état monté.

2. Intercommunication selon la revendication 1,
**caractérisée en ce que**
la liaison d'articulation (80) est en liaison avec l'élément de paroi (3) par un support (70) qui s'étend sur une partie de la hauteur de l'élément de paroi (2, 3).

3. Intercommunication selon l'une des revendications précédentes,
**caractérisée en ce que**
le support (70) est relié en bout à l'élément de paroi (3) à chaque fois par une charnière (11) comportant un axe de rotation qui est vertical à l'état monté.

4. Intercommunication selon l'une des revendications précédentes,
**caractérisée en ce que**
la liaison d'articulation (80) comprend un axe (81) s'étendant horizontalement à l'état monté, autour duquel le support (70) est monté rotatif par une douille coulissante (90).

5. Intercommunication selon l'une des revendications précédentes,
**caractérisée en ce que**
l'axe (81) peut être relié à l'autre véhicule ou partie de véhicule par une plaque d'articulation (85).

6. Intercommunication selon l'une des revendications précédentes,
**caractérisée en ce que**
le dispositif de guidage (20) comprend au moins un bras de guidage (21) disposé le long de l'un des éléments de paroi (3) et s'étendant à distance de l'élément de paroi (3), le bras de guidage (21) recevant l'autre élément de paroi (2) de façon coulissante.

7. Intercommunication selon l'une des revendications précédentes,
**caractérisée en ce que**
la distance entre l'un des éléments de paroi (3) et le bras de guidage (21) correspond à l'épaisseur de l'autre élément de paroi (2).

8. Intercommunication selon l'une des revendications précédentes,
**caractérisée en ce que**
l'articulation est réalisée sous la forme d'une charnière (10) à axe de rotation vertical à l'état monté.

9. Intercommunication selon l'une des revendications précédentes,
**caractérisée en ce que**
la charnière (10) est montée de façon amovible sur le véhicule ou la partie de véhicule (50).

10. Intercommunication selon l'une des revendications précédentes,
**caractérisée en ce que**
le bras de guidage (21) comporte une douille de guidage (24), la douille de guidage (24) étant montée mobile de façon pivotante sur l'autre élément de paroi (2).

11. Intercommunication selon l'une des revendications précédentes,
**caractérisée en ce que**
le bras de guidage (21) est monté mobile de façon pivotante sur l'un des éléments de paroi (3).

12. Intercommunication selon l'une des revendications précédentes,
**caractérisée en ce que**
l'un des éléments de paroi (3) comporte un support de palier (22) au niveau duquel le bras de guidage (21) est monté mobile de façon pivotante.

13. Intercommunication selon l'une des revendications précédentes,
**caractérisée en ce que,**
entre la douille de guidage (24) et le bras de guidage (21), sont prévus des moyens (27) servant à limiter le trajet de la douille de guidage (24) sur le bras de guidage (21).

14. Intercommunication selon la revendication 1,
**caractérisée en ce que**
le revêtement intérieur de paroi (1) comprend deux éléments de paroi (2, 3).
